(19) Europäisches Patentamt / European Patent Office / Office européen des brevets

(11) **EP 4 122 751 A1**

(12) **EUROPEAN PATENT APPLICATION**
published in accordance with Art. 153(4) EPC

(43) Date of publication:
**25.01.2023 Bulletin 2023/04**

(21) Application number: **21771126.6**

(22) Date of filing: **19.02.2021**

(51) International Patent Classification (IPC):
**B60L 53/51** (2019.01)          **B60L 53/63** (2019.01)
**B60L 55/00** (2019.01)          **B60L 58/16** (2019.01)
**H02J 3/32** (2006.01)           **H02J 3/38** (2006.01)
**H02J 7/35** (2006.01)           **H02J 13/00** (2006.01)
**H02J 7/00** (2006.01)

(52) Cooperative Patent Classification (CPC):
**B60L 53/51; B60L 53/63; B60L 55/00; B60L 58/16;**
**H02J 3/32; H02J 3/38; H02J 7/35; H02J 13/00;**
H02J 7/00; Y02E 60/00; Y02E 70/30; Y02T 10/70;
Y02T 10/7072; Y02T 90/12; Y02T 90/167;     (Cont.)

(86) International application number:
**PCT/JP2021/006323**

(87) International publication number:
**WO 2021/187004 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.03.2020   JP 2020047197**

(71) Applicant: **Hitachi, Ltd.
Tokyo 100-8280 (JP)**

(72) Inventors:
• **KOMATSU, Daiki
  Tokyo 100-8280 (JP)**
• **MAKINO, Shigeki
  Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54)     **POWER SUPPLY SYSTEM**

(57)     The present invention provides an electricity supply system enabling it to improve the ratio of renewable energy. An electricity supply system 100 includes electric vehicles 8, each being equipped with a storage battery 8a, a photovoltaic power generator 5, and an EV management controller 11 that causes the electric vehicles 8 to operate in a charging mode in which electricity is supplied from the photovoltaic power generator 5 to the electric vehicles 8 to charge the storage battery 8a or a discharging mode in which the storage battery 8a is discharged to supply electricity to loads 3. The EV management controller 11 switches over between the charging mode and the discharging mode, based on a result of comparing demand quantities of electricity for the loads 3 against the amount of electricity generated by the photovoltaic power generator 5, and a drive scheme of the electric vehicles 8.

FIG. 1

**(Cont. next page)**

(52) Cooperative Patent Classification (CPC): (Cont.)
Y04S 10/126; Y04S 30/12; Y04S 30/14

## Description

Technical Field

The present invention relates to an electricity supply system.

Background Art

A reverse power flow, i.e., supply of a surplus of electricity generated as renewable energy such as photovoltaic energy to a grid has a problem of causing instability of the grid among others. In view of this, it is being considered to make good use of such a surplus of electricity by charging storage batteries with the surplus of electricity. However, it is difficult to recover investment costs for both a power generator and storage batteries only with the amount of generated renewable energy electricity. For this reason, means that can promote renewable energy power generation systems are needed. From such a background, what is being considered is a means in which electric vehicles that can be used for both usages of motor vehicles and storage batteries are utilized to recover the investment costs through both the usages.

Patent Literature 1 describes a technology as blow: in a plant having a photovoltaic power generation system, for a period when electricity consumed by in-plant loads of in-plant equipment reaches maximum, discharging at least either of the batteries of electric vehicles connected with the in-plant equipment and stationary storage batteries within the in-plant equipment is performed; and the thus discharged electricity is added as a complement to grid electricity, so that consumption of grid electricity will not exceed contract demand of electricity.

Citation List

Patent Literature

Patent Literature 1: Japanese Unexamined Patent Application Publication No. 2012-196028

Summary of Invention

Technical Problem

However, the technology described in Patent Literature 1 just utilizes electricity from the electric vehicles' batteries and the stationary storage batteries for the purpose of cutting the peak of consumption of grid electricity and there is room for improvement in terms of improving the ratio of renewable energy. The ratio of renewable energy is a proportion of the amount of electricity generated as renewable energy in the amount of generated electricity of the whole electricity supply.

The present invention is developed in view of the foregoing context and intended to provide an electricity supply system enabling it to improve the ratio of renewable energy.

Solution to Problem

In order to solve the above-noted problem, an electricity supply system relevant to the present invention comprises a moving body equipped with a storage battery, a power generator to generate renewable energy electricity, a control device that causes the moving body to operate in a charging mode in which electricity is supplied from the power generator to the moving body to charge the storage battery or a discharging mode in which the storage battery is discharged to supply electricity to loads and is characterized in that the control device switches over between the charging mode and the discharging mode, based on a result of comparing demand quantities of electricity for the loads against the amount of electricity generated by the power generator, and a drive scheme of the moving body.

Advantageous Effects of Invention

According to the present invention, it is possible to provide an electricity supply system enabling it to improve the ratio of renewable energy

Problems, configurations, and advantageous effects other than noted above will become apparent from the following description of embodiments.

Brief Description of Drawings

Fig. 1 is a diagram depicting a configuration of an electricity supply system relevant to a first embodiment.
Fig. 2 is a diagram to explain what is processed by an XEMS and an EV management controller depicted in Fig. 1.
Fig. 3 is a diagram representing a relationship between the amount of electricity generated by a photovoltaic power generator and the demand quantities for loads in a day.
Fig. 4 is a flowchart illustrating a process that is performed by the EV management controller depicted in Fig. 1.
Fig. 5 is a diagram representing a relationship between the amount of electricity generated by the photovoltaic power generator and the demand quantities for loads on a rainy day.
Fig. 6 is a diagram to explain a mode in which a business site operator rents electric vehicles to employees.
Fig. 7 is a flowchart illustrating a process that is performed by the EV management controller concerned in a second embodiment.

Fig. 8 is a flowchart illustrating a process that is performed by the EV management controller concerned in a third embodiment.

Fig. 9 is a flowchart illustrating a process that is performed by the EV management controller concerned in a fourth embodiment.

Fig. 10 is a flowchart illustrating a process that is performed by the EV management controller concerned in a fifth embodiment.

Fig. 11 is a diagram to explain an electricity supply system relevant to a sixth embodiment.

Description of Embodiments

In the following, embodiments of the present invention will be described with the aid of the drawings. Components assigned identical reference designators across the embodiments have identical functions across the embodiments, unless otherwise stated, and, therefore, their description is not repeated.

[First Embodiment]

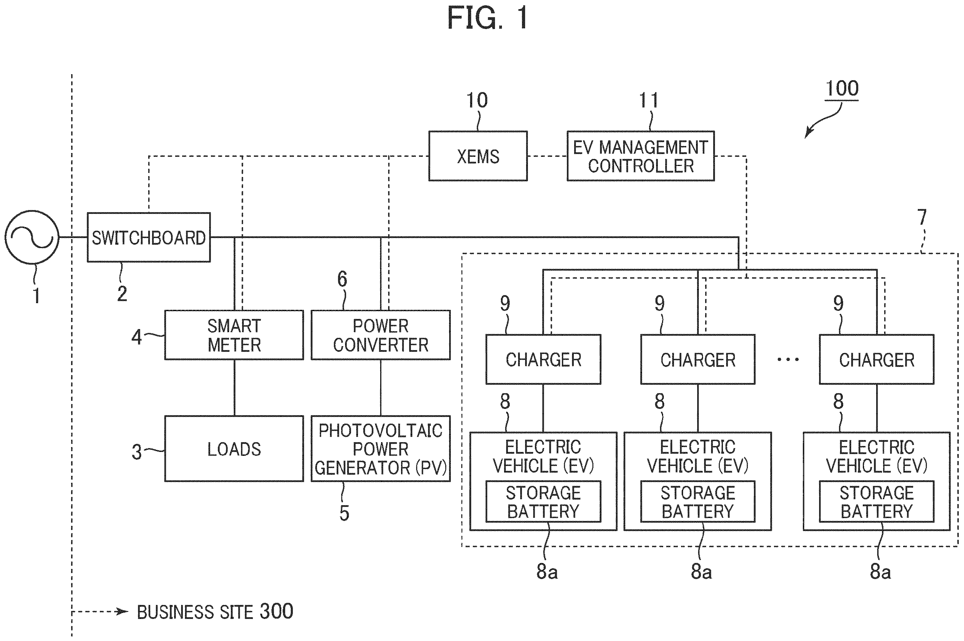

Fig. 1 is a diagram depicting a configuration of an electricity supply system 100 relevant to a first embodiment.

The electricity supply system 100 is an electricity supply system that includes a moving body equipped with a storage battery and a power generator to generate renewable energy electricity and supplies electricity generated by the power generator to loads. The moving body may be an aggregate consisting of a plurality of units of moving bodies. The moving bodies may each be equipped with a storage battery. In the present embodiment, the moving bodies are respectively electric vehicles 8, each being equipped with a storage battery 8a, the power generator to generate renewable energy electricity is a photovoltaic power generator 5, and explanation is made, taking an example case where the electricity supply system 100 is introduced in a business site 300 such as a plant or a building.

The electricity supply system 100 performs a peak shift in which a part of the amount of electricity generated by the photovoltaic power generator 5 during a peak time is shifted to a time zone other than the peak time by utilizing electric vehicles 8 that are used by persons such as employees of the business site 8. The photovoltaic power generator 5 has a power generation capacity such that the amount of electricity generated during a peak time exceeds the demand quantities for all loads 3 deployed in the business site 8. Each of the electric vehicles 8 may be a BEV (Battery Electric Vehicle) that runs using only the storage battery 8a as a power source or a PHEV (Plug-in Hybrid Electric Vehicle) that runs in a hybrid manner using the storage battery 8a and an engine as power sources. In the present embodiment, an electric vehicle 8 may be referred to as an "EV" and the photovoltaic power generator 5 as a "PV".

The electricity supply system 100 supplies electricity from a grid 1 via a switchboard 2 to the loads 3 in the business site 300, as is depicted in Fig. 1. When supplying electricity to the loads 3, the electricity supply system 100 measures the demand quantities corresponding to the quantities of electricity demanded by the loads 3 with a smart meter 4. The electricity supply system 100 includes the photovoltaic power generator 5. The electricity supply system 100 supplies electricity from the photovoltaic power generator 5 via a power converter 6 to the loads 3.

A charging station 7 is built in the business site 300 where the electricity supply system 100 was introduced. The electricity supply system 100 performs charging and discharging of the storage batteries 8a present in the electric vehicles 8 by chargers 9 provided in the charging station 7. The storage batteries 8a of the electric vehicles 8 connected with the chargers 9 are charged with electricity supplied from the grid 1 via the switchboard 2 or electricity supplied from the photovoltaic power generator 5 via the power converter 6. The storage batteries 8a of the electric vehicles 8 connected with the chargers 9 discharge and supply electricity to the loads 3 via the smart meter 4.

An XEMS (X Energy Management System) 10b monitors information on the respective loads including the demand quantities for all the loads 3. The XEMS 10 monitors information on PV electricity generated including the amount of electricity generated by the photovoltaic power generator 5. The XEMS 10 monitors EV management information including charge and discharge quantities throughout the charging station 7 via an EV management controller 11. The XEMS 10 monitors an electricity demand and supply status throughout the business site 300 via a smart meter present within the switchboard 2.

The EV management controller 11 manages each one of a plurality of the electric vehicles 8. The EV management controller 11 controls charging and discharging of the storage batteries 8a via the chargers 9 provided in the charging station 7 and monitors the states of the electric vehicles 8 including a charged rate and a deterioration rate of the storage batteries 8a. The EV management controller 11 may be configured integrally with the XEMS 10 or as a separate entity from the XEMS 10.

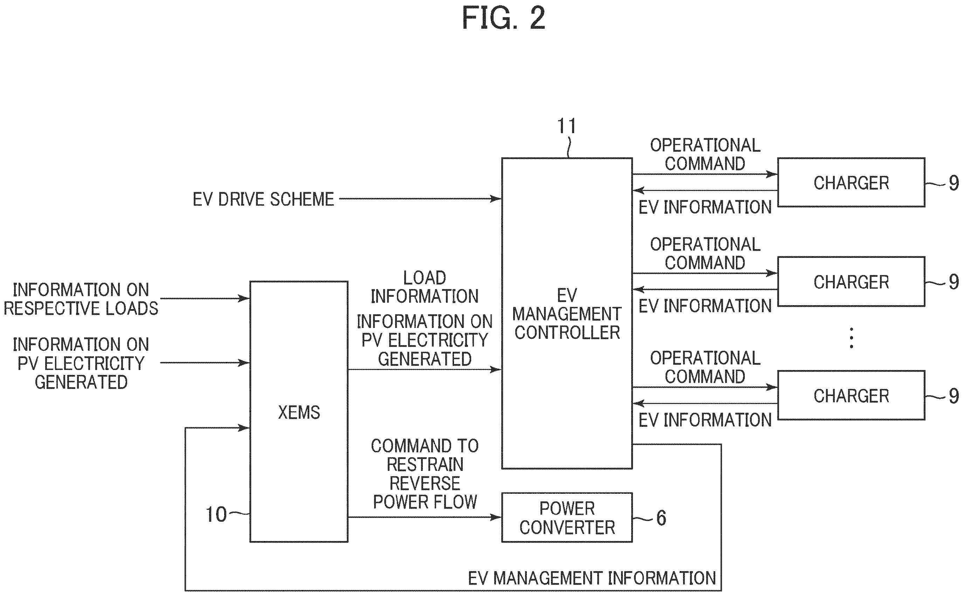

Fig. 2 is a diagram to explain what is processed by the XEMS 10 and the EV management controller 11 depicted in Fig. 1.

The XEMS 10 collects information on the respective loads of the loads 3, information on PV electricity generated by the photovoltaic power generator 5, EV management information obtained by the EV management controller 11, etc. and manages the electricity demand and supply status throughout the electricity supply system 100. The XEMS 10 integrates the information on the respective loads 3 collected from the loads 3, calculates the demand quantities of electricity for all the loads 3, and generates load information including the demand quantities for all the loads 3. Based on the generated load information as well as the information on PV electricity generated and the EV management information, the XEMS 10 decides whether or not it is timing when a reverse power flow may occur. For example, if the amount of electricity generated by the photovoltaic power generator 5 is more than the sum of the charged amounts of the storage batteries 8a present in all the electric vehicles 8 connected with the chargers 9 and the demand quantities for all the loads 3, the XEMS 10 makes a decision that it is timing when a reverse power flow may occur. When the XEMS 10 has decided that it is timing when a reverse power flow may occur, it sends a command to restrain a reverse power flow to the power converter 6. Upon having received the command to restrain a reverse power flow, the power converter 6 lessens the amount of electricity generated by the photovoltaic power generator 5 so that a reverse power flow will be restrained.

Additionally, in a situation where a reverse power flow is not restrained, the electricity supply system 100 sells electricity to the grid 1. In this situation, the XEMS 10 may send the power converter 6 a command to sell electricity by which electricity will be supplied from the electricity supply system 100 to the grid 1 instead of the command to restrain a reverse power flow. Besides, the XEMS 10 sends the EV management controller 11 the load information including the demand quantities for all the loads 3 and the information on PV electricity generated including the amount of electricity generated by the photovoltaic power generator 5.

The EV management controller 11 collects EV information indicating the states of the electric vehicles 8 via the chargers 9. In the EV information, the following are included: the charged amounts and the discharged amounts of the storage batteries 8a of the electric vehicles 8 and the charged rates and the deterioration rates of the storage batteries 8a. The EV management controller 11 controls operation of the electric vehicles 8 via the charger 9. Based on the load information and the information on PV electricity generated, which were sent from the XEMS 10, and a drive scheme of the electric vehicles 8, the EV management controller 11 generates an operational command to control charging and discharging of the storage batteries 8a of the electric vehicles 8. The EV management controller 11 sends the generated operational command to the electric vehicles 8 via the chargers 9. Thereby, the EV management controller 11 causes the electric vehicles 8 to operate in a charging mode or a discharging mode. The charging mode is a mode in which electricity is supplied from the photovoltaic power generator 5 to each storage battery 8a to charge the storage battery 8a. The discharging mode is a mode in which each storage battery 8a is discharged to supply electricity to the loads 3. The EV management controller 11 corresponds to one example of a control device in the present invention.

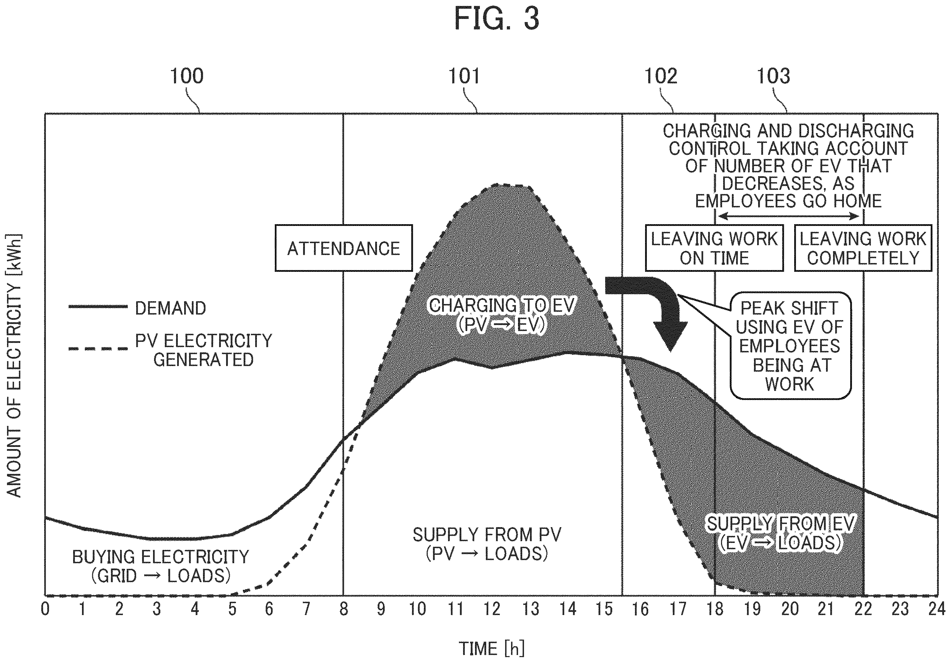

The EV management controller 11 compares the demand quantities for all the loads included in the load information against the amount of electricity generated by the photovoltaic power generator 5 included in the information on PV electricity generated. Based on a result of this comparison, the EV management controller 11 then switches the electric vehicles 8 into the discharging mode or the charging mode. For example, for a first period when the amount of generated electricity is more than the demand quantities, the EV management controller 11 causes the electric vehicles 8 to operate in the charging mode. When a transition occurs from the first period when the amount of generated electricity is more than the demand quantities to a second period when the amount of generated electricity is less than the demand quantities, the EV management controller 11 causes the electric vehicles 8 to operate in the discharging mode. Details thereof will be described later with Fig. 3.

Besides, the EV management controller 11 determines priority in timing of causing the vehicles to operate in the charging mode or the discharging mode, based on the drive scheme for each one of the electric vehicles 8. Then, according to the determined priority, the EV management controller 11 causes each one of the electric vehicles 8 to operate in the charging mode or the discharging mode. For example, the EV management controller 11 determines priority in discharge timing so that the storage battery 8a of an electric vehicle that will drive earlier among the electric vehicles 8 should be discharged at earlier timing. Then, based on the thus determined priority, the EV management controller 11 causes each one of the electric vehicles 8 to operate in the discharging mode.

Namely, the EV management controller 11 is able to switch over between the charging mode and the discharging mode, based on a result of comparing the demand quantities of electricity for the loads 3 against the amount of electricity generated by the photovoltaic power generator, and the drive scheme of the electric vehicles 8.

For instance, in a case where the electric vehicles 8 are used by employees to commute to/from work, the drive scheme of the electric vehicles 8 is a schedule in which the employees attend and leave work. For instance, in a case where the electric vehicles 8 are commercial vehicles that are used for a business, the drive scheme of the electric vehicles 8 is a schedule of the business for which the commercial vehicles are used. For instance, in a case where the electric vehicles 8 are delivery vehicles that are used for a delivery business, the drive scheme of the electric vehicles 8 is a delivery schedule of the delivery business. The EV management controller 11 is interlinked with an external system that manages these drive schemes and can acquire a drive scheme of the electric vehicles 8 from the external system. In the present embodiment, descriptions are provided assuming that the electric vehicles 8 are vehicles that are used by employees to commute to/from work and the drive scheme of the electric vehicles 8 is a schedule in which each employee will attend and leave work.

Fig. 3 is a diagram representing a relationship between the amount of electricity generated by the photovoltaic power generator 5 and the demand quantities for the loads 3 in a day. In Fig. 3, a solid line plots the demand quantities for the loads 3 and a dashed line plots the amount of electricity generated by the photovoltaic power generator 5.

In Fig. 3, the photovoltaic power generator 5 installed in the business site 300 is assumed to have a power generation capacity such that it is able to generate the amount of electricity in excess of the demand quantities for the loads 3. The amount of electricity generated by the photovoltaic power generator 5 has a peak approximately from 12:00 to 13:00 in the daytime. The amount of electricity generated by the photovoltaic power generator 5 is more than the demand quantities for the loads 3 for hours from 8:30 to 15:30. The hours from 8:30 to 15:30 correspond to the first period mentioned previously. The amount of electricity generated by the photovoltaic power generator 5 is less than the demand quantities for the loads 3 for hours after 15:30. The hours after 15:30 correspond to the second period mentioned previously. The electric vehicles 8 are assumed to be used by employees to commute to/from work. It is assumed that regulations prescribe that time to attend work is 8:00, time to leave work is 18:00, and time to leave work completely is 22:00. This schedule of attending and leaving work corresponds to a drive scheme of the electric vehicles 8. This schedule of attending and leaving work prescribes that time to leave work on time is 18:00 and time to leave work completely is 22:00 at least after 15: 30 when a transition from the first period to the second period occurs. According to this schedule of attending and leaving work, the electric vehicles 8 will drive at least after the transition from the first period to the second period. In the present embodiment, the drive scheme of the electric vehicles 8 is such that the electric vehicles 8 will drive at least after the transition from the first period to the second period.

The number of electric vehicles 8 connected with the chargers 9 in the charging station 7 in the business site 300 (hereinafter referred to as "the number of electric vehicles 8") increases from 8:00, the time to attend work and becomes maximum and remains nearly constant during working hours from 8:00 to 18:00. The number of electric vehicles 8 gradually decreases after 18:00, the time to leave work on time and becomes nearly zero at 22:00, the time to leave work completely.

In Fig. 3, a time band 100 represents a time band from 22:00 of the preceding day, the time to leave work completely, when the number of electric vehicles 8 is nearly zero, to 8:00, the time to attend work. A time band 101 represents a time band from 8:00, the time to attend work to 15:30; during this time band, the amount of electricity generated by the photovoltaic power generator 5 is more than the demand quantities for the loads 3. A time band 102 represents a time band after the transition to the state in which the amount of electricity generated by the photovoltaic power generator 5 is less than the demand quantities for the loads 3 until 18:00, the time to leave work on time. A time band 103 represents a time band from 18:00, the time to leave work on time to 22:00, the time to leave work completely.

For the time band 100, the amount of electricity generated by the photovoltaic power generator 5 is not much and is less than the demand quantities of electricity for the loads 3, since this time band is hours from midnight to early morning. Consequently, the electricity supply system 100 buys a quantity of electricity equivalent to a shortage of electricity after subtracting the amount of generated electricity from the demand quantities.

For the time band 101, when the amount of electricity generated by the photovoltaic power generator 5 becomes more than the demand quantities for the loads 3, the electricity supply system 100, while supplying electricity as much as the demand quantities to the loads 3 from within the amount of generated electricity, charges the storage batteries 8a of the electric vehicles 8 with a surplus of electricity after subtracting the demand quantities from the amount of generated electricity. Namely, the EV management controller 11 causes the electric vehicles 8 to operate in the charging mode, when the first period begins in the time band 101.

For the time band 102, the amount of electricity generated by the photovoltaic power generator 5 is less than the demand quantities of electricity for the loads 3 and, therefore, the electricity supply system 100 supplies electricity from the storage batteries 8a of the electric vehicles 8 to the loads 3 to compensate a shortage of electricity. Namely, the EV management controller 11 causes the electric vehicles 8 to operate in the discharging mode for the time band 102 when a transition has been made from the first period to the second period. At this time, the EV management controller 11 determines priority in discharge timing so that the storage battery 8a of an electric vehicle 8 of an employee who will leave work at 18:00, the time to leave work on time, should be discharged at earlier timing and causes the electric vehicles 8 to operate in the discharging mode according to the determined priority.

For the time band 103, as the number of electric vehicles 8 gradually decreases, the electricity supply system 100 supplies electricity to the loads 3 from the storage batteries 8a so that the supply of electricity from the storage battery 8a of an electric vehicle 8 that will drive earlier should occur at earlier timing to compensate a shortage of electricity after subtracting the amount of generated electricity from the demand quantities. Namely, for the time band 103, the EV management controller 11 determines priority in discharge timing so that the storage battery 8a of an electric vehicle 8 of an employee who will leave work at an earlier time should be discharged at earlier timing and causes the electric vehicles 8 to operate in the discharging mode according to the determined priority.

By switching over between the charging mode and the discharging mode as noted above, the electricity supply system 100 is able to compensate for a shortage of electricity occurring during the second period when the amount of generated electricity is less than the demand quantities using a surplus amount of electricity generated during the first period when the amount of generated electricity is more than the demand quantities. Consequently, the electricity supply system 100 is able to effectively shift the peak of the amount of electricity generated by the photovoltaic power generator 5.

Additionally, when causing the electric vehicles 8 to operate in the discharging mode, the EV management controller 11 causes the electric vehicles 8 to operate in the discharging mode in which the storage battery 8a of each electric vehicle 8 should be discharged to a level such that its remaining amount of charge is more than electricity consumption for the electric vehicle 8 when driving next time. For example, when causing the electric vehicles 8 to operate in the discharging mode for the time bands 102 and 103, the EV management controller 11 causes each electric vehicle 8 to operate in the discharging mode in which the vehicle's storage battery 8a should be discharged to a level such that its remaining amount of charge is more than the amount of electricity to be consumed during a round-up commute. Thereby, even for the electric vehicles 8 utilized for the peak shift of the amount of electricity generated by the photovoltaic power generator 5, the electricity supply system 100 avoids affecting their operation when driving next time.

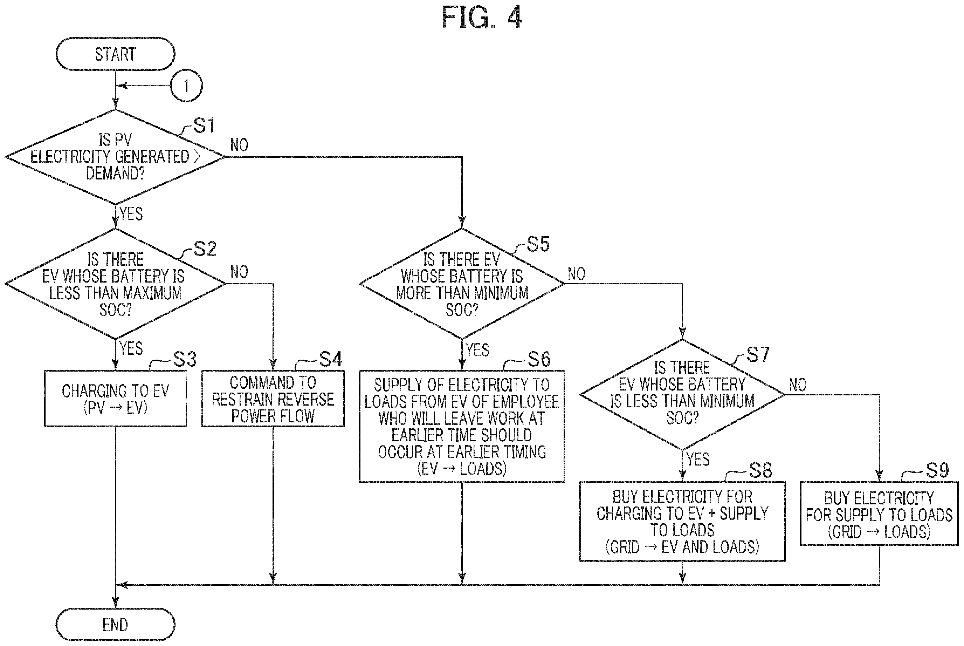

Fig. 4 is a flowchart illustrating a process that is performed by the EV management controller 11 depicted in Fig. 1.

The EV management controller 11 executes the process illustrated in Fig. 4 upon receiving the load information and the information on PV electricity generated, sent by the XEMS 10.

At step S1, the EV management controller 11 compares the demand quantities for the loads 3 against the amount of electricity generated by the photovoltaic power generator 5 and decides whether or not the amount of generated electricity is more than the demand quantities. If the amount of generated electricity is equal to or less than the demand quantities, the EV management controller 11 proceeds to step S5. Otherwise, if the amount of generated electricity is more than the demand quantities, the EV management controller 11 proceeds to step S2.

At step S2, the EV management controller 11 decides whether or not there is an electric vehicle 8 equipped with a storage battery 8a that is less than maximum SOC. SOC (State of Charge) is a charged rate of a storage battery 8a present in an electric vehicle 8. SOC indicates the remaining amount of charge of a storage battery 8a. Maximum SOC is an upper limit value of the charged rate of a storage battery 8a and is a value predetermined by specifications of an electric vehicle 8 and a storage battery 8a. Maximum SOC may be a value predetermined, taking account of deterioration due to charging and discharging of a storage battery 8a for the peak shift mentioned previously among others. If there is no electric vehicle 8 equipped with a storage battery 8a that is less than maximum SOC, the EV management controller 11 proceeds to step S4. Otherwise, if there is an electric vehicle 8 equipped with a storage battery 8a that is less than maximum SOC, the EV management controller 11 proceeds to step S3.

At step S3, the EV management controller 11 controls the XEMS 10 to supply a surplus of electricity after subtracting the demand quantities from the amount of generated electricity from the photovoltaic power generator 5 to the electric vehicle 8. Then, the EV management controller 11 causes the electric vehicle 8 to operate in the charging mode and charges the storage battery 8a of the electric vehicle 8 up to maximum SOC. Additionally, inter alia, in a case where time during which the photovoltaic power generator 5 generates electricity does not fall within the working hours, the EV management controller 11 may determine priority in charge timing so that the storage battery 8a of an electric vehicle 8 of an employee who will leave work at an earlier time should be charged at earlier timing and cause each one of the electric vehicles 8 to operate in the charging mode according to the determined priority. Subsequently, the EV management controller 11 exits this process.

At step S4, the EV management controller 11 controls the XEMS 10 to send a command to restrain a reverse power flow to the power converter 6 and restrains the amount of electricity generated by the photovoltaic power generator 5. Namely, if the storage batteries 8a present in all the electric vehicles 8 are maximum SOC, the EV management controller 11 decides that it is timing when a reverse power flow may occur and restrains the amount of electricity generated by the photovoltaic power generator 5. Additionally, in a situation where a reverse power flow is not restrained, the EV management controller 11 controls the XEMS 10 to sell electricity from the photovoltaic power generator 5 to the grid 1. Subsequently, the EV management controller 11 exits this process.

At step S5, the EV management controller 11 decides whether or not there is an electric vehicle 8 equipped with a storage battery that is more than minimum SOC. Minimum SOC is a value of charged rate that should be secured at least to fulfill electricity consumption for an electric vehicle 8 when driving next time. For example, minimum SOC is a quantity of electricity to be consumed during a round-up commute. Minimum SOC may be a value that varies depending on each electric vehicle 8. If there is no electric vehicle 8 equipped with a storage battery 8a that is more than minimum SOC, the EV management controller 11 proceeds to step S7. Otherwise, if there is an electric vehicle 8 equipped with a storage battery that is more than minimum SOC, the EV management controller 11 proceeds to step S6.

At step S6, the EV management controller 11 determines priority in discharge timing so that the storage battery 8a of an electric vehicle 8 of an employee who will leave work at an earlier time should be discharged at earlier timing and causes each electric vehicle 8 to operate in the discharging mode according to the determined priority. At this time, the EV management controller 11 causes each electric vehicle 8 to operate in the discharging mode in which the vehicle's storage battery 8a should be discharged to a level such that its remaining amount of charge is more than electricity consumption for the electric vehicle 8 when driving next time. In other words, the EV management controller 11 discharges each storage battery 8a to a level such that the SOC of the storage battery 8a will not become less than minimum SOC.

The EV management controller 11 controls the XEMS 10 to supply electricity from the electric vehicles 8 to the loads 3 and compensates a shortage of electricity after subtracting the amount of generated electricity from the demand quantities with the storage batteries 8a of the electric vehicles 8. There may be a case where electricity is not enough to meet the demand quantities even though a shortage of electricity after subtracting the amount of generated electricity from the demand quantities is compensated with the storage batteries 8a of the electric vehicles 8. In this case, the EV management controller 11 controls the XEMS 10 to buy an insufficient amount of electricity from the grid 1 for supply to the loads 3. Subsequently, the EV management controller 11 exits this process.

At step S7, the EV management controller 11 decides whether or not there is an electric vehicle 8 equipped with a storage battery 8a that is less than minimum SOC. If there is no electric vehicle 8 equipped with a storage battery 8a that is less than minimum SOC, the EV management controller 11 proceeds to step S9. Otherwise, there is an electric vehicle 8 equipped with a storage battery 8a that is less than minimum SOC, the EV management controller 11 proceeds to step S8.

At step S8, the EV management controller 11 controls the XEMS 10 to buy electricity from the grid 1 as much as a total of a shortage of electricity after subtracting the amount of generated electricity from the demand quantities plus a quantity of electricity enough to enable charging a storage battery 8a that is less than minimum SOC up to the minimum SOC. Then, the EV management controller 11 controls the XEMS 10 to supply the loads 3 with electricity equivalent to the shortage and supply an electric vehicle 8 with a quantity of electricity enough to enable charging a storage battery 8a that is less than minimum SOC up to the minimum SOC. Subsequently, the EV management controller 11 exits this process.

At step S9, the EV management controller 11 controls the XEMS 10 to buy electricity equivalent to a shortage of electricity after subtracting the amount of generated electricity from the demand quantities from the grid 1 for supply to the loads 3. Subsequently, the EV management controller 11 exits this process.

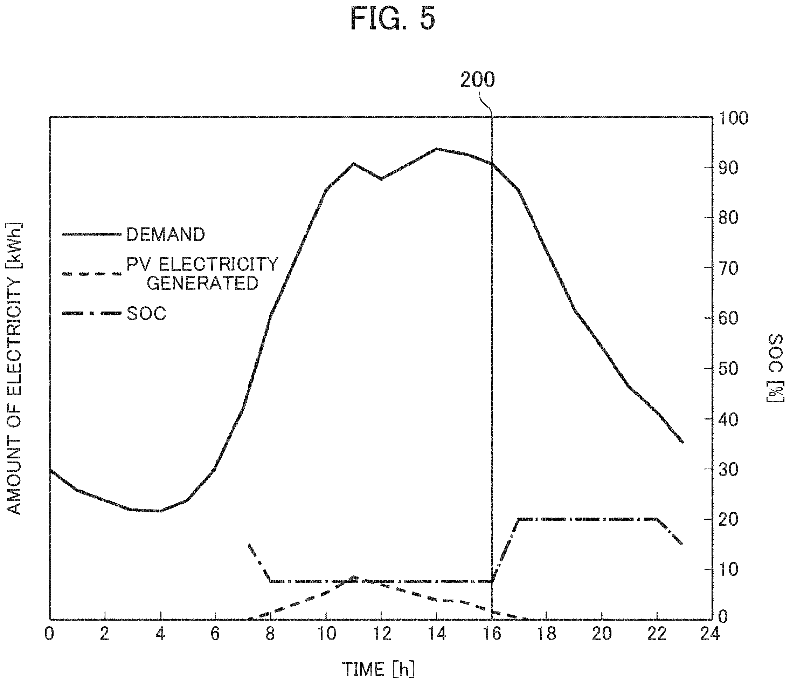

Fig. 5 is a diagram representing a relationship between the amount of electricity generated by the photovoltaic power generator 5 and the demand quantities for the loads 3 on a rainy day. In Fig. 5, a solid line plots the demand quantities for the loads 3, a dashed line plots the amount of electricity generated by the photovoltaic power generator 5, and a dot-and-dash line plots the SOC of a storage battery 8a present in an electric vehicle 8.

On a rainy data, snow day, or the like, there is a lasting period for which the amount of electricity generated by the photovoltaic power generator 5 is less than the demand quantities for the loads 3, as is presented in Fig. 5. In such a case, the EV management controller 11 causes each electric vehicle 8 to operate in the discharging mode in which the vehicle's storage battery 8a should be discharged to a level such that its remaining amount of charge is more than electricity consumption for the electric vehicle 8 when driving next time

In Fig. 5, the SOC of a storage battery 8a present in an electric vehicle 8 before a person drives the vehicle to attend work is assumed to be 15%. The SOC of the storage battery 8a is assumed to decrease by 5% each for consumption on the way there and on the way back during a round-up commute. The minimum SOC of the storage battery 8a is assumed to be 200. Time it takes to charge the storage battery 8a up to the minimum SOC is assumed to be one hour. It is assumed that time to attend work is 8:00 and time to leave work is 22:00. Time when the amount of electricity generated by the photovoltaic power generator 5 reaches the peak is assumed to be 11:00. After the amount of electricity generated by the photovoltaic power generator 5 has past the peak, the earliest time when an electric vehicle 8 among the electric vehicles 8 will drive is assumed to be 18:00. After the amount of electricity generated by the photovoltaic power generator 5 has past the peak, a time before the earliest time when an electric vehicle 8 will drive is assumed to be a time 200. Preferably, the time 200 is a time going back from the earliest time when an electric vehicle 8 will drive as long as the time it takes to charge the storage battery 8a up to the minimum SOC.

At 8:00, the time to attend work, the SOC of the storage battery 8a becomes 100, since it was 15% before a person drives the vehicle to attend work and consumption during a commute is 5%. For a time band from 8:00, the time to attend work to 22:00, the time to leave work, there is a continuing state where the amount of electricity generated by the photovoltaic power generator 5 is less than the demand quantities for the loads 3 and, therefore, the storage battery 8a is not charged and the SOC remains at 10% for a certain period of time passage.

At the time 200, the amount of electricity is decreasing subsequently, since the amount of electricity generated by the photovoltaic power generator 5 has past the peak, and the state where the amount of generated electricity is less than the demand quantities is anticipated to continue at least until the earliest time when an electric vehicle 8 will derive. For this reason, the electricity supply system 100 begins to supply electricity from the photovoltaic power generator 5 to the electric vehicles 8 at the time 200 and charges the vehicles' storage batteries 8a so that the SOC of each storage battery 8a will become equal to or more than the minimum SOC.

Namely, in a case where the period when the amount of generated electricity is less than the demand quantities is anticipated to continue until an electric vehicle 8 will drive next time, the EV management controller 11 causes each electric vehicle 8 to operate in the charging mode in which the vehicle's storage battery 8a should be charged so that its remaining amount of charge will become more than electricity consumption for the electric vehicle 8 when driving next time. Thereby, even while there is a lasting period when the amount of generated electricity is less than the demand quantities, for instance, on a rainy day or the like, the electricity supply system 100 avoids affecting operation of the electric vehicles 8 when driving next time.

Additionally, there may be a case where the amount of electricity generated by the photovoltaic power generator 5 is not enough to meet a required quantity of electricity to charge the storage batteries 8a so that their SOC will become equal to or more than the minimum SOC. In this case, the EV management controller 11 controls the XEMS 10 to buy an insufficient amount of electricity from the grid 1 for supply to the electric vehicles 8. Besides, anticipating continuation of the state where the amount of generated electricity is less than the demand quantities may be performed based on weather forecast information.

As described hereinbefore, the electricity supply system 100 relevant to the first embodiment performs a switchover between the charging mode and the discharging mode of the electric vehicles 8, based on a result of comparing the demand quantities for the loads 3 against the amount of electricity generated by the photovoltaic power generator 5, and the drive scheme of the electric vehicles 8.

Thereby, when the amount of electricity generated by the photovoltaic power generator 5 exceeds the demand quantities for the loads 3 and a surplus of electricity is available, the electricity supply system 100 relevant to the first embodiment is able to charge the storage batteries 8a present in the electric vehicles 8 with the surplus amount of electricity. In other words, even in a case when the photovoltaic power generator 5 having a power generation capacity in excess of the demand quantities for the loads 3 was introduced, the electricity supply system 100 does not need to restrain the peak amount of electricity generated by the photovoltaic power generator 5 and does not waste the electricity generated by the photovoltaic power generator 5. Therefore, the electricity supply system 100 relevant to the first embodiment enables it to promote the introduction of the photovoltaic power generator 5 and improve the ratio of renewable energy.

Particularly, in the electricity supply system 100 relevant to the first embodiment, the drive scheme of the electric vehicles 8 is such that the electric vehicles 8 will drive after the transition from the first period to the second period. Then, the EV management controller 11 causes the electric vehicles 8 to operate in the charging mode during the first period and causes the electric vehicles 8 to operate in the discharging mode upon transition from the first period to the second period.

Thereby, in the electricity supply system 100 relevant to the first embodiment, a surplus amount of electricity generated during the first period when the amount of generated electricity is more than the demand quantities can be allocated to compensate a shortage of electricity that would occur during the second period when the amount of generated electricity is less than the demand quantities. Therefore, the electricity supply system 100 relevant to the first embodiment is able to effectively shift the peak of the amount of electricity generated by the photovoltaic power generator 5. Consequently, even in a case when the photovoltaic power generator 5 having a power generation capacity in excess of the demand quantities for the loads 3 was introduced, the electricity supply system 100 relevant to the first embodiment does not need to restrain the peak amount of electricity generated by the photovoltaic power generator 5 and does not cause instability of the grid 1. Consequently, the electricity supply system 100 relevant to the first embodiment enables it to greatly promote the introduction of the photovoltaic power generator 5 and greatly improve the ratio of renewable energy.

Furthermore, the electricity supply system 100 relevant to the first embodiment is arranged to determine priority in timing of causing each one of the electric vehicles 8 to operate in the charging mode or the discharging mode, based on the drive scheme for each one of the electric vehicles 8, and cause each one of the electric vehicles 8 to operate in the charging mode or the discharging mode according to the determined priority.

Thereby, the electricity supply system 100 relevant to the first embodiment enables it to stably shift the peak of the amount of electricity generated by the photovoltaic power generator 5, even if the drive scheme for each one of the electric vehicles 8 varies depending on the schedules of employees or the like who use the electric vehicles 8. Consequently, the electricity supply system 100 relevant to the first embodiment enables it to further promote the introduction of the photovoltaic power generator 5 and further improve the ratio of renewable energy.

Furthermore, the electricity supply system 100 relevant to the first embodiment is arranged to determine priority in discharge timing so that the storage battery 8a of an electric vehicle 8 that will work earlier among the electric vehicles 8 should be discharged at earlier timing and cause each one of the electric vehicles 8 to operate in the discharging mode according to the determined priority.

Thereby, the electricity supply system 100 relevant to the first embodiment enables it to surely shift the peak of the amount of electricity generated by the photovoltaic power generator 5. Consequently, the electricity supply system 100 relevant to the first embodiment enables it to further promote the introduction of the photovoltaic power generator 5 and further improve the ratio of renewable energy.

Furthermore, the electricity supply system 100 relevant to the first embodiment is arranged to cause each electric vehicle 8 to operate in the discharging mode in which the vehicle's storage battery 8a should be discharged to a level such that its remaining amount of charge is more than electricity consumption for the electric vehicle 8 when driving next time.

Thereby, even for the electric vehicles 8 utilized for the peak shift of the amount of electricity generated by the photovoltaic power generator 5, the electricity supply system 100 relevant to the first embodiment avoids affecting their operation when driving next time. Therefore, the electricity supply system 100 relevant to the first embodiment enables it to shift the peak of the amount of electricity generated by the photovoltaic power generator 5 without restricting vehicle usage of the electric vehicles 8. Consequently, the electricity supply system 100 relevant to the first embodiment enables it to further promote the introduction of the photovoltaic power generator 5 and further improve the ratio of renewable energy.

Furthermore, in the electricity supply system 100 relevant to the first embodiment, the electric vehicles 8 are vehicles that are used by employees to commute to/from work and the drive scheme of the electric vehicles 8 is a schedule in which each employee will attend and leave work.

Thereby, in the electricity supply system 100 relevant to the first embodiment, the drive scheme of the electric vehicles 8 can be such that the electric vehicles 8 will drive after the transition from the first period to the second period. Therefore, in the electricity supply system 100 relevant to the first embodiment, a surplus amount of electricity generated during the first period when the amount of generated electricity is more than the demand quantities can be allocated to compensate a shortage of electricity that would occur during the second period when the amount of generated electricity is less than the demand quantities and it is possible to effectively shift the peak of the amount of electricity generated by the photovoltaic power generator 5. Consequently, it is possible to further promote the introduction of the photovoltaic power generator 5 and further improve the ratio of renewable energy.

Furthermore, in a case where the period when the amount of generated electricity is less than the demand quantities is anticipated to continue until an electric vehicle 8 will drive next time, the electricity supply system 100 relevant to the first embodiment is arranged to cause each electric vehicle 8 to operate in the charging mode in which the vehicle's storage battery 8a should be charged so that its remaining amount of charge will become more than electricity consumption for the electric vehicle 8 when driving next time.

Thereby, even while there is a lasting period when the amount of generated electricity is less than the demand quantities, for instance, on a rainy day or the like, the electricity supply system 100 relevant to the first embodiment avoids affecting operation of the electric vehicles 8 when driving next time and, therefore, does not restrict vehicle usage of the electric vehicles 8. Consequently, the electricity supply system 100 relevant to the first embodiment enables it to further promote the introduction of the photovoltaic power generator 5 and further improve the ratio of renewable energy.

Additionally, in the foregoing embodiment, the electric vehicles 8 that employees use may be vehicles they have or vehicles rented to them from the operator of the business site 300.

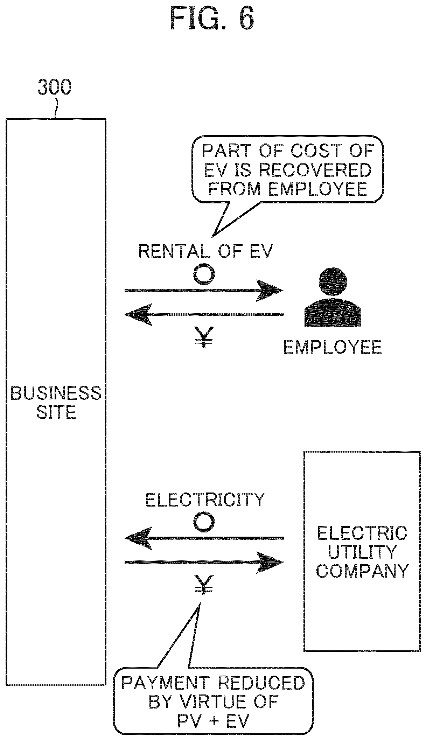

Fig. 6 is a diagram to explain a mode in which the business site 300 operator rents the electric vehicles 8 to the employees.

In the electricity supply system 100, the peak shift of the amount of electricity generated by the photovoltaic power generator 5 is performed by utilizing the storage batteries 8a of the electric vehicles 8 that employees use and, therefore, it depends on the number of the electric vehicles 8. Iteration of charging and discharging of the storage batteries 8a whenever the peak shift of the amount of electricity generated by the photovoltaic power generator 5 is performed may accelerate deterioration of the storage batteries 8a. This is less profitable for the employees, if the electric vehicles 8 are those possessed by the employees. For this reason, essentially, it is a reasonable way that the business site 300 operator that benefits by utilizing the electric vehicles 8 for usage as storage batteries returns profits to the employees or possesses the electric vehicles 8.

As is depicted in Fig. 6, the business site 300 operator may possess electric vehicles 8 and rent the electric vehicles 8 to the employees at a fixed monthly fee. Thereby, the business site 300 operator can recover a part of the investment cost of the electric vehicles 8 the operator possesses from the employees and reduce electric bills to be paid to an electric utility company by virtue of private power generation by the photovoltaic power generator 5. It becomes easy for the business site 300 operator to recover the investment cost for introducing the photovoltaic power generator 5 and, therefore, it becomes feasible to fulfill economic efficiency. If the fixed monthly fee is cheap, the employees receive the benefits in which they can use the electric vehicles 8 freely at a cheap fixed monthly fee. Consequently, by adopting the model depicted in Fig. 6, the electricity supply system 100 enables it to further promote the introduction of the photovoltaic power generator 5 and further improve the ratio of renewable energy.

[Second Embodiment]

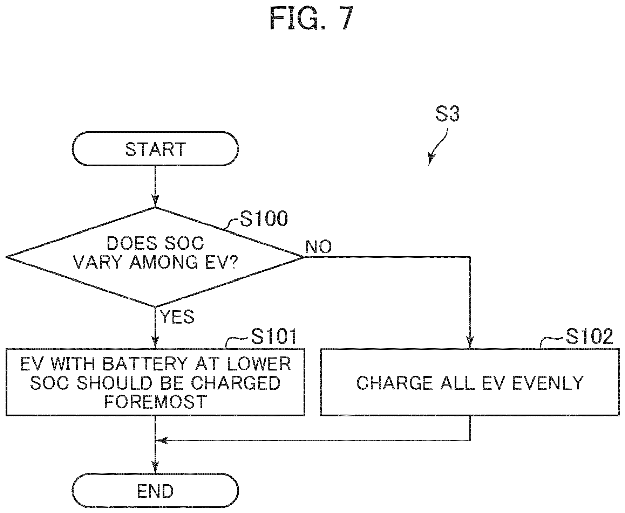

An electricity supply system 100 relevant to a second embodiment is described with Fig. 7. In the description concerning the second embodiment, configurations and operations that are the same as for the first embodiment are omitted from the description.

Electricity to be charged and electricity to be discharged to/from the storage batteries 8a in the charging mode and the discharging mode are determined by the maximum output of each of the chargers 9. Suppose that the maximum output of each charger 9 is P[kW], the number of electric vehicles 9 equipped with storage batteries 8a that are maximum SOC is A, and the number of electric vehicles 9 equipped with storage batteries 8a that are less than maximum SOC is B. In this case, electricity chargeable to all the electric vehicles 8 is P × B [kW] at maximum. Otherwise, given that the storage batteries 8a present in all the electric vehicles 9 are less than maximum SOC, electricity chargeable to all the electric vehicles 8 is P × (A + B) [kW] at maximum. Namely, electricity chargeable to all the electric vehicles 8 in the case where the storage batteries 8a present in a subset of the electric vehicles 8 are less than the maximum SOC is smaller than that in the case where the storage batteries 8a present in all the electric vehicles 8 are less than the maximum SOC. For this reason, the amount of electricity chargeable to all the electric vehicles 8 in a situation where SOC of the storage batteries 8a varies among the electric vehicles 8 is liable to become lower than that in a situation where there is no variation of SOC of the storage batteries 8a.

One factor causing a variation in SOC of the storage batteries among the electric vehicles 8 is that the drive scheme varies among the electric vehicles 8; for example, it is supposable that the time to attend work and the time to leave work vary among the employees. Therefore, the EV management controller 11 concerned in the second embodiment causes each one of the electric vehicles 8 in the charging mode and the discharging mode taking account of that the time to attend work and the time to leave work vary among the employees.

Fig. 7 is a flowchart illustrating a process that is performed by the EV management controller 11 concerned in the second embodiment. Fig. 7 illustrates the process that is performed by the EV management controller 11 taking account of that the time to attend work varies among the employees.

The EV management controller 11 concerned in the second embodiment executes processing in the same way as for the process illustrated in Fig. 4 with the exception of step S3 in Fig. 4. The EV management controller 11 concerned in the second embodiment performs the process illustrated in Fig. 7, if having decided that there is an electric vehicle 8 equipped with a storage battery 8a that is less than maximum SOC at step S2 in Fig. 4.

At step S100, the EV management controller 11 decides whether or not SOC of the storage batteries 8a varies among the electric vehicles 8. If SOC of the storage batteries 8a varies among the electric vehicles 8, the EV management controller 11 proceeds to step S101. Otherwise, if there is no variation of SOC of the storage batteries 8a among the electric vehicles 8, the EV management controller 11 proceeds to step S102.

At step S101, the EV management controller 11 controls the XEMS 10 to supply a surplus of electricity after subtracting the demand quantities from the amount of generated electricity from the photovoltaic power generator 5 to the electric vehicles 8. Then, the EV management controller 11 determines priority of charging so that the storage battery 8a at lower SOC, of an electric vehicle 8, should be charged foremost and causes each one of the electric vehicles in the charging mode according to the determined priority. Thereby, the storage batteries 8a present in each one of the electric vehicles 8 are charged so as to narrow SOC variation. Subsequently, the EV management controller 11 exits this process.

At step S102, the EV management controller 11 controls the XEMS 10 to supply a surplus of electricity after subtracting the demand quantities from the amount of generated electricity from the photovoltaic power generator 5 to the electric vehicles 8. Then, the EV management controller 11 causes each one of the electric vehicles 8 to operate in the charging mode such that the storage batteries 8a present in all the electric vehicles 8 will be charged evenly. For example, the EV management controller 11 charges the storage batteries 8a present in all the electric vehicles 8 with a quantity of electricity that is obtained by dividing the surplus amount of electricity after subtracting the demand quantities from the amount of generated electricity by the number of the electric vehicles evenly. Thereby, the storage batteries 8a present in all the electric vehicles 8 are charged, kept in a condition in which there is no variation in SOC. However, if electricity that is charged to the storage batteries 8a is too small, conversion loss of the chargers 9 may become large. For this reason, necessity of charging may be determined against a threshold that is set as the minimum electricity to be charged, taking account of the conversion loss of the chargers 9. Subsequently, the EV management controller 11 exits this process.

As described above, if SOC of the storage batteries 8a varies among the electric vehicles, the EV management controller 11 concerned in the second embodiment determines priority of charging so that the storage battery 8a at lower SOC, of an electric vehicle 8, should be charged foremost. Then, the EV management controller 11 concerned in the second embodiment causes each one of the electric vehicles in the charging mode according to the determined priority.

Thereby, even if SOC of the storage batteries 8a varies among the electric vehicles 8, the EV management controller 11 concerned in the second embodiment is able to charge the storage batteries 8a so as to narrow SOC variation. Therefore, the EV management controller 11 concerned in the second embodiment is able to prevent the amount of electricity chargeable to all the electric vehicles from lowering and, therefore, enables it to stably shift the peak of the amount of electricity generated by the photovoltaic power generator 5. Consequently, the electricity supply system 100 relevant to the second embodiment enables it to further promote the introduction of the photovoltaic power generator 5 and further improve the ratio of renewable energy.

[Third Embodiment]

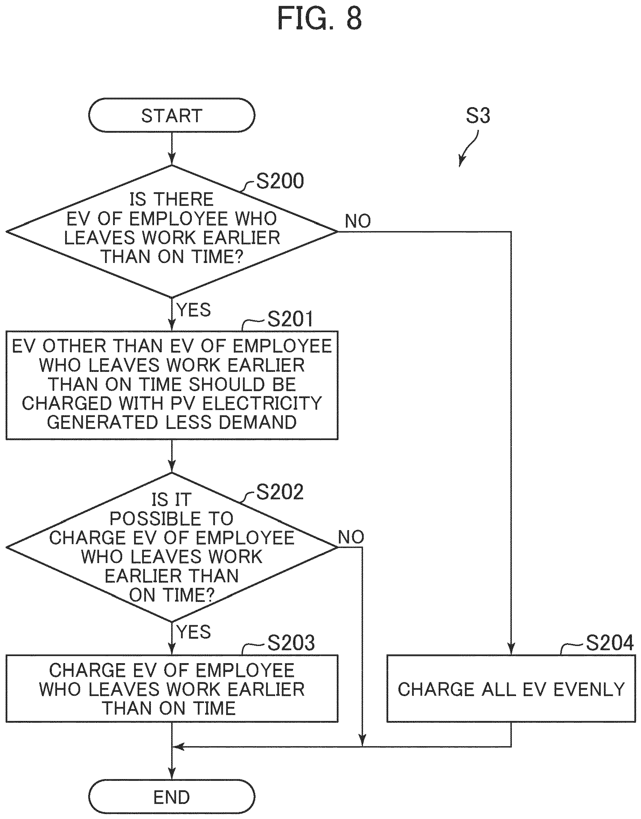

An electricity supply system 100 relevant to a third embodiment is described with Fig. 8. In the description concerning the third embodiment, configurations and operations that are the same as for the second embodiment are omitted from the description.

In some cases, an electric vehicle 8 of an employee who leaves work at an earlier time than on time may leave the charging station before the transition from the first period when the amount of generated electricity is more than the demand quantities to the second period when the amount of generated electricity is less than the demand quantities. In this case, even if a storage battery 8a present in an electric vehicle 8 of an employee who leaves work at an earlier time is charged, electricity cannot be supplied from the storage battery 8a to the loads 3 to compensate a shortage of electricity during the second period. The electricity supply system 100 relevant to a third embodiment performs the peak shift of the amount of electricity generated by the photovoltaic power generator 5 by utilizing the storage batteries 8a present in the electric vehicles 8 other than an electric vehicle 8 of an employee who leaves work at an earlier time than on time.

Namely, in the electricity supply system 100 relevant to the third embodiment, the drive scheme for most of the electric vehicles 8 is such that the electric vehicles 8 will drive after the transition from the first period to the second period. However, the drive scheme for some of the electric vehicle 8 is such that the electric vehicles 8 will drive before the transition from the first period to the second period. In this case, the EV management controller 11 concerned in the third embodiment determines priority of charging so that the storage battery 8a which presents in one of the most of the electric vehicles 8 should be charged foremost and causes each one of the electric vehicles 8 to operate in the charging mode according to the determined priority. Thereby, the electricity supply system 100 relevant to the third embodiment is able to shift the peak of the amount of electricity generated by the photovoltaic power generator 5 by utilizing the storage batteries 9a present in the most of the electric vehicles whose drive scheme is such that the vehicles will drive after the transition from the first period to the second period.

Fig. 8 is a flowchart illustrating a process that is performed by the EV management controller 11 concerned in the third embodiment. Fig. 8 illustrates the process that is performed by the EV management controller 11 taking account of that the time to leave work varies among the employees.

The EV management controller 11 concerned in the third embodiment executes processing in the same way as for the process illustrated in Fig. 4 with the exception of step S3 in Fig. 4. The EV management controller 11 concerned in the third embodiment performs the process illustrated in Fig. 8, if having decided that there is an electric vehicle 8 equipped with a storage battery 8a that is less than maximum SOC at step S2 in Fig. 4.

At step S200, the EV management controller 11 decides whether or not there is an electric vehicle 8 of an employee who leaves work at an earlier time than on time. If there is no electric vehicle 8 of an employee who leaves work at an earlier time than on time, the EV management controller 11 proceeds to step S204. Otherwise, if there is an electric vehicle 8 of an employee who leaves work at an earlier time than on time, the EV management controller 11 proceeds to step S201.

At step S201, the EV management controller 11 controls the XEMS 10 to supply a surplus of electricity after subtracting the demand quantities from the amount of generated electricity from the photovoltaic power generator 5 to the electric vehicles 8. Then, the EV management controller 11 causes the electric vehicles 8 other than an electric vehicle 8 of an employee who leaves work at an earlier time than on time to operate in the charging mode. Thereby, the EV management controller 11 is able to charge the storage batteries 8a present in the electric vehicles 8 other than an electric vehicle 8 of an employee who leaves work at an earlier time than on time with the surplus amount of electricity.

At step S202, the EV management controller 11 decides whether or not it is possible to charge the storage battery 8a present in an electric vehicle 8 of an employee who leaves work at an earlier time than on time. Namely, if a surplus amount of electricity still remains even after charging the storage batteries 8a at step S201, it is possible to charge the storage battery 8a present in an electric vehicle 8 of an employee who leaves work at an earlier time than on time. If it is not possible to charge the storage battery 8a present in an electric vehicle 8 of an employee who leaves work at an earlier time than on time, the EV management controller 11 exits this process. Otherwise, if it is possible to charge the storage battery 8a present in an electric vehicle 8 of an employee who leaves work at an earlier time than on time, the EV management controller 11 proceeds to step S203.

At step S203, the EV management controller 11 controls the XEMS 10 to supply a surplus amount of electricity that still remains even after charging the storage batteries 8a at step S201 from the photovoltaic power generator 5 to the electric vehicle 9. Then, the EV management controller 11 causes the electric vehicle 8 of an employee who leaves work at an earlier time than on time to operate in the charging mode. Thereby, the EV management controller 11 is able to charge the storage battery 8a present in the electric vehicle 8 of an employee who leaves work at an earlier time than on time with a surplus amount of electricity that still remains even after charging the storage batteries 8a at step S201. Subsequently, the EV management controller 11 exits this process.

At step S204, the EV management controller 11 executes the same processing as step S102 in Fig. 7 so that the storage batteries 8a present in all the electric vehicles 8 will be charged evenly. Subsequently, the EV management controller 11 exits this process.

As described above, the electricity supply system 100 relevant to the third embodiment determines priority of charging so that the storage battery 8a which presents in one of the most of the electric vehicles 8 whose drive scheme is such that the vehicles will drive after the transition from the first period to the second period should be charged foremost. Then, the electricity supply system 100 relevant to the third embodiment causes each one of the electric vehicles 8 in the charging mode according to the determined priority.

Thereby, even if there is some of electric vehicles 8 that will drive before the transition from the first period to the second period, the electricity supply system 100 relevant to the third embodiment is able to stably shift the peak of the amount of electricity generated by the photovoltaic power generator 5 by utilizing the storage batteries 8a present in most of the electric vehicles 8 that will drive after the transition from the first period to the second period. Consequently, the electricity supply system 100 relevant to the third embodiment enables it to further promote the introduction of the photovoltaic power generator 5 and further improve the ratio of renewable energy.

[Fourth Embodiment]

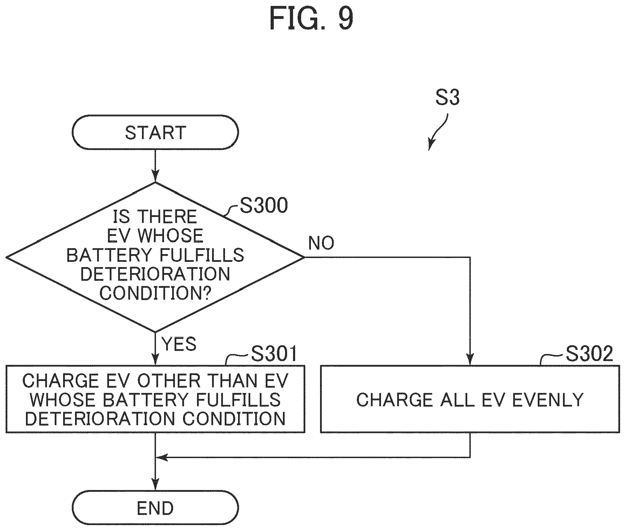

An electricity supply system 100 relevant to a fourth embodiment is described with Fig. 9. In the description concerning the fourth embodiment, configurations and operations that are the same as for the first embodiment are omitted from the description.

The electric vehicles 8 are not only used as vehicles, also used for usage as storage batteries to be utilized for the peak shift of the amount of electricity generated by the photovoltaic power generator 5; this may accelerate deterioration of the storage batteries 8a. It is important that diagnosis for deterioration of the storage batteries 8a is performed for the electric vehicles 8, when involved in the peak shift. In the electricity supply system 100 relevant to the fourth embodiment, the EV management controller 11 performs diagnosis for deterioration of the storage batteries 8a and controls charging and discharging of the storage batteries 8a according to deterioration states of the storage batteries 8a. In a case where the electric vehicles 8 perform diagnosis for deterioration of the storage batteries 8a and prediction of lifespan, a result of the diagnosis and prediction may be used.

As in Fig. 3, the storage batteries 8a are charged during the time band 101 and discharged during the time bands 102, 103. Because charging and discharging are thus performed for a comparatively long time, SOC changes in a large range. Therefore, deterioration can be diagnosed from an integrated value of charging or discharging current. The electricity supply system 100 relevant to the fourth embodiment is able to diagnose deterioration of the storage batteries 8a using Mathematical Formula 1 below.

[Mathematical Formula 1]

$$Q\max = \frac{\int Idt}{\Delta SOC/100}$$

Mathematical Formula 1 is a formula for calculating the full charge capacity Qmax of a storage battery 8a. In Mathematical Formula 1, I denotes a charging or discharging current value and $\Delta SOC$ denotes an amount of change of SOC. For example, a value of SOC measured by each electric vehicle 8 may be used or inferred from a result of voltage measurement of each storage battery 8a. Because the full charge capacity Qmax decreases, as a storage battery 8a deteriorates, it is possible to diagnose deterioration of the storage battery 8a through calculation of the full charge capacity Qmax. The EV management controller 11 manages the full charge capacity Qmax per vehicle as one piece of information included within EV information that indicates the states of the electric vehicles 8; thereby, it can manage the deterioration states of the storage batteries 8a.

When a storage battery 8a deteriorates significantly, its full charge capacity Qmax may decrease significantly and, accordingly, the amount of chargeable electricity may decrease significantly. Consequently, the electricity supply system 100 may become unable to efficiently shift the amount of electricity generated by the photovoltaic power generator 5. Besides, significant deterioration of a storage battery 8a may have effect on the lifespan of the electric vehicle 8 equipped with the storage battery and the lifespan of the electric vehicle 8 may be exhausted before a manufacture warranty period. Therefore, the electricity supply system 100 relevant to the fourth embodiment avoids utilization of a storage battery 8a that suffers from significant deterioration for the peak shift and preferentially utilizes storage batteries 8a that have not deteriorated so much for the peak shift.

A storage battery 8a that suffers from significant deterioration is the storage battery 8a whose full charge capacity Qmax deviates by 10% or more from an average value of full charge capacity Qmax of the storage batteries 8a present in all the electric vehicles 8. In the electricity supply system 100 relevant to the fourth embodiment, a certain deterioration condition is predetermined such that the full charge capacity Qmax of a storage battery deviates by 10% or more from the average value. Then, the electricity supply system 100 relevant to the fourth embodiment is arranged to cause each one of the electric vehicles 8 to operate in the charging mode in which charging is performed, but avoiding charging an electric vehicle 8 equipped with a storage battery 8a whose deterioration state fulfills the predetermined deterioration condition among the electric vehicles 8.

Fig. 9 is a flowchart illustrating a process that is performed by the EV management controller 11 concerned in the fourth embodiment.

The EV management controller 11 concerned in the fourth embodiment executes processing in the same way as for the process illustrated in Fig. 4 with the exception of step S3 in Fig. 4. The EV management controller 11 concerned in the fourth embodiment performs the process illustrated in Fig. 9, if having decided that there is an electric vehicle 8 equipped with a storage battery 8a that is less than maximum SOC at step S2 in Fig. 4.

At step S300, the EV management controller 11 decides whether or not there is an electric vehicle 8 equipped with a storage battery 8a that fulfills the predetermined deterioration condition. The predetermined deterioration condition is, inter alia, that the full charge capacity Qmax of a storage battery deviates by 10% or more from the average value of full charge capacity Qmax of the storage batteries 8a present in all the electric vehicles 8, as noted previously. If there is no electric vehicle 8 equipped with a storage battery 8a that fulfills the predetermined deterioration condition, the EV management controller 11 proceeds to step S302. Otherwise, if there is an electric vehicle 8 equipped with a storage battery 8a that fulfills the predetermined deterioration condition, the EV management controller 11 proceeds to step S301.

At step S301, the EV management controller 11 controls the XEMS 10 to supply a surplus of electricity after subtracting the demand quantities from the amount of generated electricity from the photovoltaic power generator 5 to the electric vehicles 8. Then, the EV management controller 11 causes the electric vehicles 8 other than an electric vehicle 8 equipped with a storage battery 8a that fulfills the predetermined deterioration condition to operate in the charging mode. Thereby, the EV management controller 11 is able to charge the storage batteries 8a present in the electric vehicles 8 other than an electric vehicle 8 equipped with a storage battery 8a that fulfills the predetermined deterioration condition with the surplus amount of electricity. Subsequently, the EV management controller 11 exits this process.

At step S302, the EV management controller 11 executes the same processing as step S102 in Fig. 7 so that the storage batteries 8a present in all the electric vehicles 8 will be charged evenly. Subsequently, the EV management controller 11 exits this process.

As described above, the electricity supply system 100 relevant to the fourth embodiment is arranged to cause each one of the electric vehicles 8 to operate in the charging mode in which charging is performed, but avoiding charging an electric vehicle 8 equipped with a storage battery 8a whose deterioration state fulfills the predetermined deterioration condition among the electric vehicles 8.

Thereby, the electricity supply system 100 relevant to the fourth embodiment is able to charge the storage batteries 8a with avoidance of charging a storage battery 8a that suffers from significant deterioration resulting in a significant decrease in the amount of chargeable electricity. Therefore, the electricity supply system 100 relevant to the fourth embodiment is able to charge the storage batteries 8a so as to narrow variation in the deterioration states of the storage batteries among the electric vehicles and enables it to prevent shortening of the lifespan of an electric vehicle 8 equipped with a storage battery 8a that suffers from significant deterioration. In consequence, the electricity supply system 100 relevant to the fourth embodiment enables it to prevent that the lifespan of the electric vehicles 8 will be exhausted before a manufacture warranty period and to prevent damaging the value of a vehicle of the electric vehicles 8. In addition, the electricity supply system 100 relevant to the fourth embodiment utilizes only the storage batteries 8a with less variation in terms of the amount of chargeable electricity for the peak shift and is therefore able to efficiently shift the peak of the amount of electricity generated by the photovoltaic power generator 5. Consequently, the electricity supply system 100 relevant to the fourth embodiment enables it to further promote the introduction of the photovoltaic power generator 5 and further improve the ratio of renewable energy.

Besides, the electricity supply system 100 relevant to the fourth embodiment enables it to quantify how much the use of the electric vehicles for usage as the storage batteries has an effect on their lifespan by diagnosing the deterioration of the storage batteries 8a. Thereby, the electricity supply system 100 relevant to the fourth embodiment enables it to quantitatively explain whether or not the use of the electric vehicles 8 for usage as the storage batteries causes a failure of the electric vehicles 8 within a manufacture warranty period.

[Fifth Embodiment]

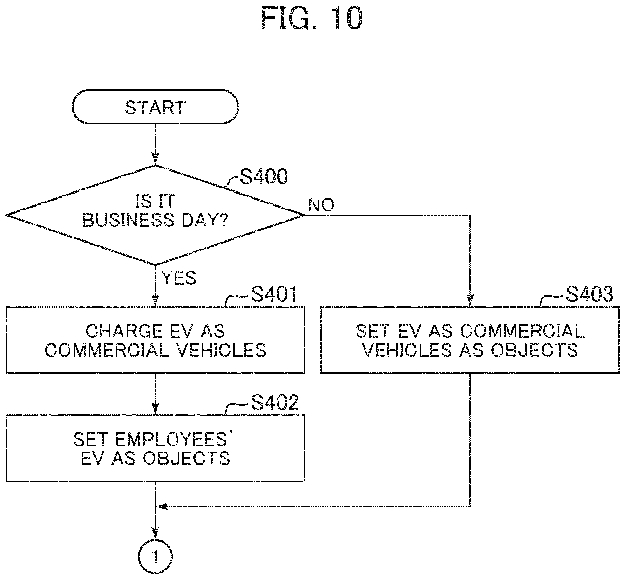

An electricity supply system 100 relevant to a fifth embodiment is described with Fig. 10. In the description concerning the fifth embodiment, configurations and operations that are the same as for the first embodiment are omitted from the description.

When it is not a business day of the business site 300, electric vehicles 8 that employees use to commute to/from work do not exist in the business site 300 and, therefore, it is impossible to shift the peak of the amount of electricity generated by the photovoltaic power generator 5 by utilizing the electric vehicles 8 that employees use to commute to/from work. In this case, it is supposable that the charging station 7 in the business site 300 is made open to the public or electric vehicles 300 present in the business site 300 other than the electric vehicles 8 that employees use to commute to/from work are utilized to perform the peak shift. In the electricity supply system 100 relevant to the fifth embodiment, electric vehicles 8 that are utilized for the peak shift are assumed to include commercial vehicles that are used for a business in the business site 300, not only the vehicles that are used by employees to commute to/from work.

Commercial electric vehicles 8 will drive according a schedule of a business for which they are used on a business day of the business site 300 and will stay at the charging station 7 on a non-business day of the business site 300. Namely, in the electricity supply system 100 relevant to the fifth embodiment, the drive scheme of the commercial electric vehicles 8 is a schedule of the business for which those vehicles are used.

Fig. 10 is a flowchart illustrating a process that is performed by the EV management controller 11 concerned in the fifth embodiment.

The EV management controller 11 concerned in the fifth embodiment executes processing in the same way as for the process illustrated in Fig. 4; however, it performs the process illustrated in Fig. 10 before executing step S1 in Fig. 4.

At step S400, the EV management controller 11 decides whether or not today is a business day of the business site 300. If today is not a business day of the business site 300, the EV management controller 11 proceeds to step S403. Otherwise, if today is a business day of the business site 300, the EV management controller 11 proceeds to step S401.

At step S401, the EV management controller 11 controls the XEMS 10 to supply a surplus of electricity after subtracting the demand quantities from the amount of generated electricity from the photovoltaic power generator 5 to the commercial electric vehicles 8. Then, the EV management controller 11 causes the commercial electric vehicles 8 to operate in the charging mode. Thereby, the EV management controller 11 is able to charge the storage batteries 8a present in the commercial electric vehicles 8 with a surplus amount of electricity.

At step S402, the EV management controller 11 sets the electric vehicles that employees use to commute to/from work as objects of subsequent processing (objects of processing at steps S1 to S9 as in Fig. 4). Subsequently, the EV management controller 11 proceeds to step S1 as in Fig. 4. The electricity supply system 100 is arranged such that, on a business day, the commercial electric vehicles 8 are not set as objects of subsequent processing; this avoids that insufficient charging affects operation of the commercial electric vehicles 8 when driving next time.

At step S403, the EV management controller 11 sets the commercial electric vehicles 8 as objects of subsequent processing (objects of processing at steps S1 to S9 as in Fig. 4). Subsequently, the EV management controller 11 proceeds to step S1 as in Fig. 4.

Additionally, in some cases, most of the commercial electric vehicles may stay at the charging station 7 even on a business day of the business site 300. In this case, at step S402, the EV management controller 11 may set not only the electric vehicles that employees use to commute to/from work, also the commercial vehicles as objects of subsequent processing (objects of processing at steps S1 to S9 as in Fig. 4).

As descried above, the electricity supply system 100 relevant to the fifth embodiment is adapted such that electric vehicles 8 that are utilized for the peak shift include commercial vehicles that are used for a business in the business site 300 and the drive scheme of the commercial electric vehicles 8 is a schedule of the business for which those vehicles are used.

Thereby, the electricity supply system 100 relevant to the fifth embodiment is able to shift the peak of the amount of electricity generated by the photovoltaic power generator 5 even for a period on a non-business day. Consequently, the electricity supply system 100 relevant to the fifth embodiment enables it to further promote the introduction of the photovoltaic power generator 5 and further improve the ratio of renewable energy.

[Sixth Embodiment]

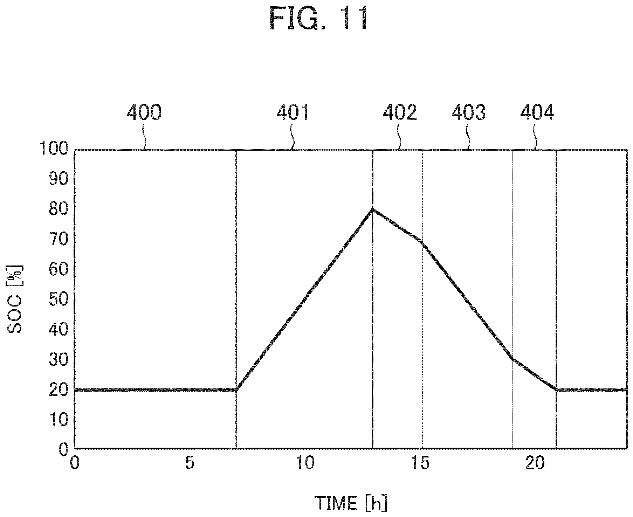

An electricity supply system 100 relevant to a sixth embodiment is described with Fig. 11. In the description concerning the sixth embodiment, configurations and operations that are the same as for the fifth embodiment are omitted from the description.

The electricity supply system 100 is applicable even for a case where the business site 300 is a facility such as a warehouse that stores goods and the electric vehicles 8 are delivery vehicles that are used for a delivery business to deliver the goods. In the electricity supply system 100 relevant to the sixth embodiment, the electric vehicles 8 that are utilized for the peak shift are assumed to be delivery vehicles that are used for a delivery business.

When delivery electric vehicles 8 stay in the business site 300 as a source of delivery, the work of loading goods to the vehicles is performed. Then, the delivery electric vehicles 8 will drive according to a delivery schedule and stay at a destination of delivery where the work of unloading goods is performed. Namely, in the electricity supply system 100 relevant to the sixth embodiment, the drive scheme of the delivery electric vehicles 8 is a delivery schedule of the delivery business.

There may be a case where chargers 9 are provided at both the business site 300 as the source of delivery and the destination of delivery. In this case, the electricity supply system 100 relevant to the sixth embodiment is arranged to supply electricity from the photovoltaic power generator 5 to the delivery electric vehicles 8 and charge the storage batteries 8a in the business site 300 as the source of delivery. Then, the electricity supply system 100 relevant to the sixth embodiment is arranged to discharge the storage batteries 8a at the destination of delivery so that electricity can be supplied from the delivery electric vehicles 8 to loads 3 at the destination of delivery.

Namely, in the electricity supply system 100 relevant to the sixth embodiment, the photovoltaic power generator 5 is placed in the business site 300 as the source of delivery and the loads 3 are set up at the destination of delivery of the delivery business. Then, in the electricity supply system 100 relevant to the sixth embodiment, the EV management controller 11 causes the delivery electric vehicles 8 to operate in the charging mode in the business site 300 as the source of delivery and causes the delivery electric vehicles 8 to operate in the discharging mode at the destination of delivery. Thereby, in the electricity supply system 100 relevant to the sixth embodiment, the delivery electric vehicles 8 are able to deliver not only goods, also electricity to the destination of delivery.

Fig. 11 is a diagram to explain the electricity supply system 100 relevant to the sixth embodiment. Fig. 11 is a graph representing transition for a day of SOC of a storage battery 8a present in a delivery electric vehicle 8.

In Fig. 11, a time band 400 represents a time band before business start for which the delivery electric vehicle 8 stands by in the business site 300 as the source of delivery. A time band 401 represents a time band after business start for which the work of loading goods to the delivery electric vehicle 8 is performed in the business site 300 as the source of delivery. A time band 402 represents a time band for which, after the loading work, the delivery electric vehicle 8 leaves the business site 300 as the source of delivery and drives toward the destination of delivery. A time band 403 represents a time band for which the work of unloading goods from the delivery electric vehicle 8 is performed at the destination of delivery. A time band 404 represents a time band for which, after the unloading work, the delivery electric vehicle 8 leaves the destination of delivery and drives toward the business site 300 as the source of delivery.

For the time band 400, the amount of electricity generated by the photovoltaic power generator 5 is extremely small and the delivery electric vehicle 8 stands by in the business site 300 as the source of delivery. SOC of the storage battery 8a is constant for the time band 401. For the time band 401, the amount of electricity generated by the photovoltaic power generator 5 increases and the work of loading goods to the delivery electric vehicle 8 is in process in the business site 300 as the source of delivery. For the time band 401, the electricity supply system 100 causes the delivery electric vehicle 8 to operate in the charging mode so that electricity will be supplied from the photovoltaic power generator 5 to the delivery electric vehicle 8 to charge the storage battery 8a. For the time band 401, SOC of the storage battery 8a rises.

For the time band 402, the delivery electric vehicle 8 is driving toward the destination of delivery. SOC of the storage battery 8a falls for the time band 402. For the time band 403, the work of unloading goods from the delivery electric vehicle 8 is in process at the destination of delivery. For the time band 403, the electricity supply system 100 causes the delivery electric vehicle 8 to operate in the discharging mode so that electricity discharged from the delivery electric vehicle 8 will be supplied from the electric vehicle 8 to the loads 3 at the destination of delivery. SOC of the storage battery 8a falls for the time band 403. For the time band 404, the delivery electric vehicle 8 is driving toward the business site 300. SOC of the storage battery 8a falls for the time band 404.

As descried above, the electricity supply system 100 relevant to the sixth embodiment is adapted such that electric vehicles 8 that are utilized for the peak shift are delivery vehicles that are used for a delivery business and the drive scheme of the delivery electric vehicles 8 is a delivery schedule of the delivery business. Then, in the electricity supply system 100 relevant to the sixth embodiment, the EV management controller 11 causes the delivery electric vehicles 8 to operate in the charging mode in the business site 300 as the source of delivery and causes the delivery electric vehicles 8 to operate in the discharging mode at the destination of delivery.

Thereby, in the electricity supply system 100 relevant to the sixth embodiment, the delivery electric vehicles 8 are able to deliver electricity as well to the destination of delivery and, therefore, it is possible to allow consumption of electricity generated as renewable energy to increase at the destination of delivery. Consequently, the electricity supply system 100 relevant to the sixth embodiment enables it to improve the ratio of use of renewable energy at the destination of delivery. Namely, in the electricity supply system 100 relevant to the sixth embodiment, it is possible to shift the peak of the amount of electricity generated by photovoltaic power generator 5 even if the photovoltaic power generator 5 and the loads 3 are located at different points and it is possible to take external demand of electricity covered by the grid into the business site 300. Consequently, the electricity supply system 100 relevant to the sixth embodiment enables it to further promote the introduction of the photovoltaic power generator 5 and further improve the ratio of renewable energy.

Additionally, in a case where a plurality of delivery electric vehicles 8 are present, the EV management controller 11 concerned in the sixth embodiment determines priority of charging so that the storage battery 8a of an electric vehicle 8 that will drive for delivery at an earlier time should be charged foremost. Then, expediently, the EV management controller 11 concerned in the sixth embodiment causes each one of the electric vehicles 8 to operate in the charging mode according to the determined priority. Thereby, the EV management controller 11 concerned in the sixth embodiment enables it to charge the storage batteries 8a with the amount of electricity generated by the photovoltaic power generator 5 without waste.

[Others]

Note that the present invention is not limited to the embodiments described hereinbefore and various modifications are included therein. By way of example, the foregoing embodiments are those described in detail to explain the present invention to make it easy to understand and the invention is not necessarily limited to those including all components described. Besides, a subset of the components of an embodiment may be replaced by components of another embodiment and components of another embodiment may be added to the components of an embodiment. Besides, for a subset of the components of each embodiment, other components may be added to the subset or the subset may be removed or replaced by other components.

Besides, a subset or all of the aforementioned components, functions, processing units, processing means, etc. may be implemented by hardware; e.g., inter alia, by designing an integrated circuit to implement them. Besides, the aforementioned components, functions, etc. may be implemented by software in such a way that a processor interprets and executes a program that implements the respective functions. Information such as a program implementing the respective functions, tables, and files can be placed in a recording device such as a memory, hard disk, and SSD (Solid State Drive) or a recording medium such as an IC card, SD card, and DVD.

Besides, control lines and information lines which are considered as necessary for explanation are delineated and all control lines and information lines involved in a product are not necessarily delineated. Actually, almost all components may be considered to be interconnected.

List of Reference Signs

3:      loads
5:      photovoltaic power generator
8:      electric vehicle (moving body)
8a:     storage battery
11:     EV management controller (control device)
100:    electricity supply system

**Claims**

**1.** An electricity supply system comprising:

a moving body equipped with a storage battery;
a power generator to generate renewable energy electricity;
a control device that causes the moving body to operate in a charging mode in which electricity is supplied from the power generator to the moving body to charge the storage battery or a discharging mode in which the storage battery is discharged to supply electricity to loads,
**characterized in that** the control device switches over between the charging mode and the discharging mode, based on a result of comparing demand quantities of electricity for the loads against the amount of electricity generated by the power generator, and a drive scheme of the moving body.

**2.** The electricity supply system according to claim 1, **characterized in that**:

the moving body is an aggregate consisting of a plurality of units of moving bodies;
the control device determines priority in timing of causing the moving bodies to operate in the discharging mode or the charging mode, based on the drive scheme of each one of the moving bodies; and
the control device causes each one of the moving bodies to operate in the discharging mode or the charging mode according to the determined priority.

**3.** The electricity supply system according to claim 2, **characterized in that**:

the drive scheme is such that the moving bodies will drive after transition from a first period when the amount of generated electricity is more than the demand quantities to a second period when the amount of generated electricity is less than the demand quantities; and
the control device causes the moving bodies to operate in the charging mode during the first period and causes the moving bodies to operate in the discharging mode upon transition from the first period to the second period.

**4.** The electricity supply system according to claim 3, **characterized in that**:

the control device determines the priority in discharge timing so that the storage battery of a moving body that will drive earlier among the moving bodies should be discharged at earlier timing; and
the control device causes each one of the moving bodies to operate in the discharging mode according to the determined priority.

**5.** The electricity supply system according to claim 2, **characterized in that**:

the drive scheme for most of the moving bodies is such that the moving bodies will drive after the transition from the first period when the amount of generated electricity is more than the demand quantities to the second period when the amount of generated electricity is less than the demand quantities;

the drive scheme for some of the moving bodies is such that the moving bodies will drive before the transition from the first period to the second period;

the control device determines the priority of charging so that the storage battery which presents in one of the most of the moving bodies should be charged foremost; and

the control device causes each one of the moving bodies to operate in the charging mode according to the determined priority.

**6.** The electricity supply system according to claim 1, **characterized in that**:
the control device causes the moving body to operate in the discharging mode in which the storage battery should be discharged to a level such that its remaining amount of charge is more than electricity consumption for the moving body when driving next time.

**7.** The electricity supply system according to claim 1, **characterized in that**:
in a case where the period when the amount of generated electricity is less than the demand quantities is anticipated to continue until the moving body will drive next time, the control device causes the moving body to operate in the charging mode in which the storage battery should be charged to a level such that its remaining amount of charge is more than electricity consumption for the moving body when driving next time.

**8.** The electricity supply system according to claim 1, **characterized in that**:

the moving body is an aggregate consisting of a plurality of units of moving bodies;

the control device manages a charged rate of the storage battery present in each one of the moving bodies;

if the charged rate varies among the moving bodies, the control device determines priority of charging so that the storage battery whose charged rate is lower present in one of the moving bodies should be charged foremost; and

the control device causes each one of the moving bodies to operate in the charging mode according to the determined priority.

**9.** The electricity supply system according to claim 1, **characterized in that**:

the moving body is an aggregate consisting of a plurality of units of moving bodies;

the control device manages a deterioration state of the storage battery present in each one of the moving bodies; and

the control device causes each one of the moving bodies to operate in the charging mode in which the storage battery is charged, but avoiding charging a moving body equipped with a storage battery whose deterioration state fulfills a predetermined deterioration condition among the moving bodies.

**10.** The electricity supply system according to claim 1, **characterized in that**:

The moving body is a vehicle that is used by an employee to commute to/from work; and

the drive scheme is a schedule in which the employee attends and leaves work.

**11.** The electricity supply system according to claim 1, **characterized in that**:

the moving body is a commercial vehicle that is used for a business; and

the drive scheme is a schedule of the business for which the commercial vehicle is used.

**12.** The electricity supply system according to claim 1, **characterized in that**:

the moving body is a delivery vehicle that is used for a delivery business;

the drove scheme is a schedule of the delivery business;

the power generator is installed at a source of delivery of the delivery business;

the loads are installed at a destination of delivery of the delivery business;

the control device causes the moving body to operate in the charging mode at the source of delivery; and

the control device causes the moving body to operate in the discharging mode at the destination of delivery.

# FIG. 1

# FIG. 2

# FIG. 3

EP 4 122 751 A1

# FIG. 4

START

↓ ①

**S1** — IS PV ELECTRICITY GENERATED > DEMAND?
- NO → (to S5)
- YES ↓

**S2** — IS THERE EV WHOSE BATTERY IS LESS THAN MAXIMUM SOC?
- NO → **S4** COMMAND TO RESTRAIN REVERSE POWER FLOW
- YES ↓

**S3** — CHARGING TO EV (PV → EV)

**S5** — IS THERE EV WHOSE BATTERY IS MORE THAN MINIMUM SOC?
- NO → (to S7)
- YES ↓

**S6** — SUPPLY OF ELECTRICITY TO LOADS FROM EV OF EMPLOYEE WHO WILL LEAVE WORK AT EARLIER TIME SHOULD OCCUR AT EARLIER TIMING (EV → LOADS)

**S7** — IS THERE EV WHOSE BATTERY IS LESS THAN MINIMUM SOC?
- NO → **S9** BUY ELECTRICITY FOR SUPPLY TO LOADS (GRID → LOADS)
- YES → **S8** BUY ELECTRICITY FOR CHARGING TO EV + SUPPLY TO LOADS (GRID → EV AND LOADS)

END

EP 4 122 751 A1

# FIG. 5

EP 4 122 751 A1

# FIG. 6

300

PART OF COST OF
EV IS RECOVERED
FROM EMPLOYEE

RENTAL OF EV

BUSINESS
SITE

EMPLOYEE

ELECTRICITY

ELECTRIC
UTILITY
COMPANY

PAYMENT REDUCED
BY VIRTUE OF
PV + EV

# FIG. 7

S3

```
        ┌─────────────┐
        │    START    │
        └──────┬──────┘
               │
               ▼
          ╱─────────╲  ╭S100
        ╱             ╲
      ╱   DOES SOC      ╲   NO
     ⟨  VARY AMONG EV?   ⟩──────────────┐
      ╲                 ╱               │
        ╲             ╱                 │
          ╲─────────╱                   │
               │ YES                    │
               ▼        ╭S101           ▼        ╭S102
     ┌──────────────────────┐   ┌──────────────────────┐
     │ EV WITH BATTERY AT    │   │                      │
     │  LOWER SOC SHOULD BE   │   │ CHARGE ALL EV EVENLY │
     │   CHARGED FOREMOST     │   │                      │
     └──────────┬────────────┘   └──────────┬───────────┘
                │                            │
                │◄───────────────────────────┘
                ▼
        ┌─────────────┐
        │     END     │
        └─────────────┘
```

# FIG. 8

```
          ┌──────────────┐
          │    START     │
          └──────┬───────┘
                 │
                 ▼
           ╱──────────╲  ⌐S200
          ╱  IS THERE  ╲
         ╱ EV OF EMPLOYEE╲        NO
        ╱ WHO LEAVES WORK ╲─────────────────────┐
         ╲ EARLIER THAN  ╱                       │
          ╲  ON TIME?   ╱                        │
           ╲──────────╱                          │
                 │ YES                           │
                 ▼   ⌐S201                        │
   ┌──────────────────────────────┐              │
   │ EV OTHER THAN EV OF EMPLOYEE │              │
   │  WHO LEAVES WORK EARLIER     │              │
   │   THAN ON TIME SHOULD BE     │              │
   │  CHARGED WITH PV ELECTRICITY │              │
   │   GENERATED LESS DEMAND      │              │
   └───────────────┬──────────────┘              │
                   │                             │
                   ▼   ⌐S202                      │
             ╱──────────╲                        │
            ╱    IS IT   ╲                       │
           ╱ POSSIBLE TO  ╲     NO               │
          ╱ CHARGE EV OF   ╲────────────┐        │
           ╲EMPLOYEE WHO   ╱            │        │
            ╲ LEAVES WORK ╱             │        │
             ╲EARLIER THAN╱             │        │
              ╲ ON TIME? ╱              │        │
               ╲────────╱               │        │
                 │ YES                  │        │
                 ▼   ⌐S203               │        ▼ ⌐S204
   ┌──────────────────────────┐         │   ┌─────────────────────┐
   │  CHARGE EV OF EMPLOYEE    │         │   │ CHARGE ALL EV EVENLY│
   │ WHO LEAVES WORK EARLIER   │         │   └──────────┬──────────┘
   │      THAN ON TIME         │         │              │
   └─────────────┬────────────┘         │              │
                 │◄────────────────────┴──────────────┘
                 ▼
          ┌──────────────┐
          │     END      │
          └──────────────┘
```

S3

# FIG. 9

S3

START

IS THERE
EV WHOSE
BATTERY FULFILLS
DETERIORATION
CONDITION? ⌐S300

NO

YES

CHARGE EV OTHER THAN EV
WHOSE BATTERY FULFILLS
DETERIORATION CONDITION ⌐S301

CHARGE ALL EV EVENLY ⌐S302

END

# FIG. 10

```
        ┌──────────────┐
        │    START     │
        └──────────────┘
                │
                ▼
              ╱─────╲  ⌐S400
           ╱           ╲
         ╱    IS IT       ╲        NO
        ╲  BUSINESS DAY?  ╱─────────────────┐
         ╲              ╱                    │
           ╲          ╱                      │
              ╲─────╱                        │
                │ YES                        │
                ▼                            ▼
    ┌──────────────────────┐ ⌐S401  ┌──────────────────────┐ ⌐S403
    │    CHARGE EV AS       │        │  SET EV AS COMMERCIAL │
    │ COMMERCIAL VEHICLES   │        │  VEHICLES AS OBJECTS  │
    └──────────────────────┘        └──────────────────────┘
                │                            │
                ▼                            │
    ┌──────────────────────┐ ⌐S402          │
    │   SET EMPLOYEES'      │                │
    │    EV AS OBJECTS      │                │
    └──────────────────────┘                │
                │                            │
                ▼◄───────────────────────────┘
              ┌───┐
              │ 1 │
              └───┘
```

28

# FIG. 11

## INTERNATIONAL SEARCH REPORT

International application No.

PCT/JP2021/006323

### A. CLASSIFICATION OF SUBJECT MATTER

Int. Cl. B60L53/51(2019.01)i, B60L53/63(2019.01)i, B60L55/00(2019.01)i, B60L58/16(2019.01)i, H02J3/32(2006.01)i, H02J3/38(2006.01)i, H02J7/35(2006.01)i, H02J13/00(2006.01)i, H02J7/00(2006.01)n

According to International Patent Classification (IPC) or to both national classification and IPC

### B. FIELDS SEARCHED

Minimum documentation searched (classification system followed by classification symbols)

Int. Cl. B60L53/51, B60L53/63, B60L55/00, B60L58/16, H02J3/32, H02J3/38, H02J7/35, H02J13/00, H02J7/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2015/064155 A1 (TOSHIBA CORP.) 07 May 2015, entire document | 1-12 |
| A | JP 2011-244682 A (LS INDUSTRIAL SYSTEMS CO., LTD.) 01 December 2011, entire document | 1-12 |
| A | JP 2018-102047 A (TOSHIBA CORP.) 28 June 2018, entire document | 1-12 |
| A | JP 2015-39260 A (NISSAN MOTOR CO., LTD.) 26 February 2015, entire document | 1-12 |
| A | JP 2012-196028 A (MITSUBISHI ELECTRIC CORP.) 11 October 2012, entire document | 1-12 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10.05.2021 | 18.05.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2021/006323

| Patent Documents referred to in the Report | Publication Date | Patent Family | Publication Date |
|---|---|---|---|
| WO 2015/064155 A1 | 07.05.2015 | JP 2015-89266 A<br>entire document<br>TW 201520955 A<br>entire document | |
| JP 2011-244682 A | 01.12.2011 | CN 102244401 A<br>entire document<br>JP 5481425 B2<br>entire document<br>KR 10-2011-0125542 A<br>entire document<br>US 2011/0282513 A1<br>entire document<br>US 8831786 B2<br>entire document | |
| JP 2018-102047 A | 28.06.2018 | (Family: none) | |
| JP 2015-39260 A | 26.02.2015 | JP 6236981 B2<br>entire document | |
| JP 2012-196028 A | 11.10.2012 | JP 5372987 B2<br>entire document | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012196028 A